# EUROPÄISCHE PATENTANMELDUNG

(11) **EP 2 631 624 A2**
(43) Veröffentlichungstag der Anmeldung: **28.08.2013**
(21) Anmeldenummer: 12170233.6
(22) Anmeldetag: 31.05.2012
(51) Int. Cl.: G01L 5/16

(54) **Kraft-Momenten-Sensor zum Messen von Kräften und Momenten**

(30) Priorität: 27.02.2012 DE 102012202917
(71) Anmelder: Deutsches Zentrum für Luft- und Raumfahrt e.V., 51147 Köln (DE)
(72) Erfinder: Seibold, Ulrich, Burnaby, British Columbia V3N 4Z4 (CA)
(74) Vertreter: von Kreisler Selting Werner

(57) **Zusammenfassung**

Ein Kraft-Momenten-Sensor zum Messen von drei orthogonalen Kräften und drei orthogonalen Momenten weist ein inneres Halteelement (30) auf, das von einem äußeren Halteelement (32) umgeben ist. Die beiden Halteelemente (30, 32) sind über Verformungselemente (34) miteinander verbunden. Je Verformungselement (34) ist mindestens ein Verformungsaufnehmer (42, 44) angeordnet. Der Kraft-Momenten-Sensor ist vorzugsweise monolithisch ausgebildet und die als Dehnmessstreifen ausgebildeten Verformungsaufnehmer (42, 44) sind vorzugsweise in einer oder zwei insbesondere parallelen Ebenen angeordnet.

## Beschreibung

Die Erfindung betrifft einen Kraft-Momenten-Sensor zum Messen von insbesondere drei orthogonalen Kräften und drei orthogonalen Momenten.

Zur Messung von drei Kräften und drei Momenten ist aus DE 102 17 018 ein monolithischer Kraft-Momenten-Sensor bekannt. Dieser weist zwei in einem axialen Abstand zueinander angeordnete kreiszylindrische Ringe auf. Die beiden Ringe sind über sechs gleich lange gleichmäßig am Umfang verteilt angeordnete Stäbe verbunden. Auf den Stäben sind Dehnmessstreifen angeordnet. Über die Dehnmessstreifen können drei orthogonale Kräfte sowie drei orthogonale Momente bestimmt werden. Die Verbindung zwischen den sechs Stäben und den beiden kreiszylindrischen Ringen erfolgt jeweils über Festkörpergelenke. Die Dehnmessstreifen sind über elektrische Leitungen mit einer Auswerteeinrichtung zur Bestimmung der Kräfte und Momente verbunden. Ein derartiger Kraft-Momenten-Sensor weist jedoch den Nachteil auf, dass die Herstellung als monolithisches Bauteil äußerst aufwendig und somit kostenintensiv ist. Ferner baut ein derartiger Kraft-Momenten-Sensor insbesondere in axialer Richtung groß, so dass das Einsatzgebiet eines derartigen Kraft-Momenten-Sensors beschränkt ist.

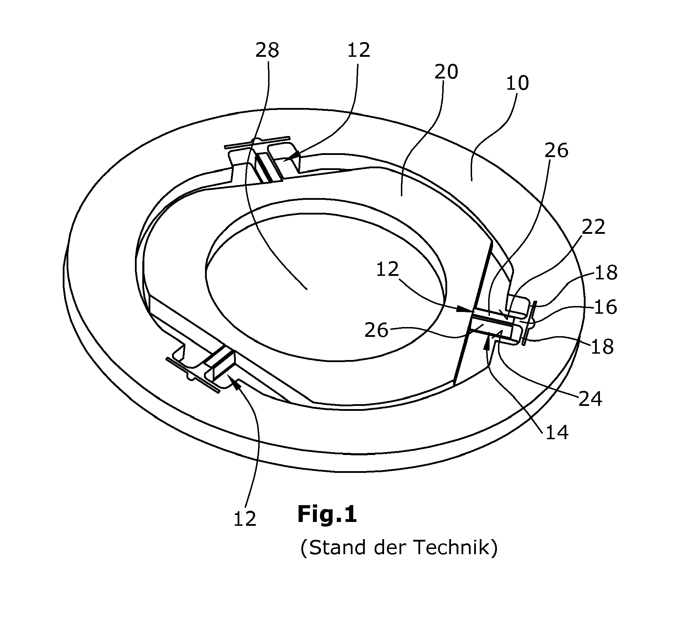

Ein relativ flach bauender, als ATI-Nano 43 erhältlicher Kraft-Momenten-Sensor der Firma ATI Industrial Automation, Apex, NC, USA ist schematisch in Figur 1 dargestellt. Dieser weist ein äußeres Halteelement 10 auf, das ein inneres Halteelement 20 umgibt. Die beiden Halteelemente 10, 20 sind mit den jeweiligen Bauteilen verbunden, zwischen denen die auftretenden Kräfte und Momente gemessen werden sollen. Die beiden Halteelemente sind über drei Verformungselemente 12 miteinander verbunden. Die Verformungselemente 12 weisen ein erstes im Querschnitt im Wesentlichen quadratisches Bauteil 14 in Form eines Balkens auf. Dieser ist über einen Träger 16 an dessen Enden 18 mit dem äußeren Halteelement 10 verbunden. Auf der Ober- und Unterseite 22 sowie beiden Seitenfläche 24 ist jeweils ein Dehnmessstreifen 26 angeordnet. Da der in Figur 1 dargestellte Kraft-Momenten-Sensor drei regelmäßig am Umfang des inneren Halteelements 20 angeordnete Verformungselemente aufweist, sind insgesamt zwölf Verformungsaufnehmer in Form der Dehnmessstreifen 26 angeordnet. Hierdurch sind drei Kräfte und drei Momente bestimmbar. Insbesondere für den Einsatz eines derartigen Sensors bei chirurgischen Instrumenten ist eine mittige zentrale Öffnung 28 wichtig, um Instrumente und andere Bauteile hindurchführen zu können. Andererseits müssen die Außenabmessungen des Sensors möglichst gering sein. Eine Miniaturisierung eines derartigen Kraft-Momenten-Sensors auf einen Außendurchmesser von weniger als 20 mm ist daher nicht möglich, da insbesondere für den seitlich an dem Balken 14 angeordneten Dehnmessstreifen ausreichend Montageraum vorgesehen sein muss. Ferner besteht die Problematik, dass bei einer weiteren Verringerung des Materialvolumens an den Einspannpunkten eine Verwindung der Struktur auftreten kann, die die Messergebnisse verfälschen würde.

Ferner ist aus DE 102 17 019 ein weiterer monolithischer Kraft-Momenten-Sensor bekannt. Ein inneres Halteelement ist über drei stegförmige Verformungselemente mit drei äußeren Halteelementen verbunden. Die äußeren Halteelemente verlaufen zwischen den äußeren Enden der im Wesentlichen radial angeordneten stegförmigen Verformungselemente. Unterschiedliche Verformungsaufnehmer, wie Dehnmessstreifen, zur Aufnahme von Linearkräften oder Scherungskräften sind sowohl auf den Oberseiten der Verformungselemente als auch auf den drei äußeren Halteelementen angeordnet. Die äußeren Elemente dienen somit einerseits als Halteelemente, mit dem der Sensor gehalten wird und andererseits auch als Verformungselemente, da nur durch Verformung dieser Elemente entsprechende Kräfte über die Verformungsaufnehmer ermittelt werden können. Dies hat insbesondere den Nachteil, dass bei der Montage des Kraft-Momenten-Sensors an den äußeren Halteelementen Spannungen durch die Befestigung auftreten können. Hierdurch können die Messungen verfälscht werden.

Ferner ist aus DE 100 13 059 ein Kraft-Momenten-Sensor mit einem äußeren und einen inneren Halteelement bekannt. An dem inneren Haltelement ist ein sich in Längsrichtung erstreckender Stempel vorgesehen, der zur Aufnahme der entsprechenden Verformungsaufnahmeelemente dient. Ferner sind sowohl an der Oberseite als auch an der Unterseite des äußeren Halteelements Verformungsaufnahmeelemente vorgesehen. Auch bei diesem Kraft-Momenten-Sensor können Verfälschungen der Messergebnisse aufgrund der beim Befestigen des Sensors auftretenden Spannungen vorgerufen werden.

Aufgabe der Erfindung ist es, einen Kraft-Momenten-Sensor zu schaffen, mit dem insbesondere das Messen von drei vorzugsweise orthogonalen Kräften und drei orthogonalen Momenten möglich ist, dessen Aufbau einfach ist, um insbesondere auch eine starke Miniaturisierung zu ermöglichen.

Die Lösung der Aufgabe erfolgt erfindungsgemäß durch die Merkmale des Anspruchs 1.

Der erfindungsgemäße Kraft-Momenten-Sensor, der insbesondere zum Messen von drei vorzugsweise orthogonalen Kräften und insbesondere drei vorzugsweise orthogonale Momenten geeignet ist, weist ein inneres sowie ein äußeres Halteelement auf. Das äußere Halteelement, das vorzugsweise ringförmig ausgebildet ist, umgibt das innere vorzugsweise ebenfalls ring-oder scheibenförmig ausgebildete Halteelement. Die beiden Halteelemente sind vorzugsweise über mindestens drei, insbesondere mindestens sechs Verformungselementen miteinander verbunden. Hierbei ist das Erhöhen der Anzahl der Verformungselemente auf mehr als sechs Verformungselemente optional, um beispielsweise redundante Messungen vornehmen zu können. Vorzugsweise ist auf jedem der Verformungselemente mindestens ein, vorzugsweise mindestens zwei und besonders bevorzugt genau zwei Verformungsaufnehmer, wie Dehnmessstreifen angeordnet. Hierbei ist es bei dem erfindungsgemäßen Kraft-Momenten-Sensor möglich, die Verformungsaufnehmer in einer oder zwei, insbesondere parallelen Ebene anzuordnen. Die Verformungsaufnehmer können hierbei an einer Oberseite und/oder einer Unterseite des insbesondere flach ausgebildeten Kraft-Momenten-Sensors angeordnet sein. Dies hat den erfindungswesentlichen Vorteil, dass keine Verformungsaufnehmer seitlich an einem Biegebalken angeordnet sein müssen. Hierdurch ist eine weitere Miniaturisierung möglich, wobei eine Miniaturisierung derart möglich ist, dass der Kraft-Momenten-Sensor einen Außendurchmesser von weniger als 20 mm insbesondere weniger als 10 mm aufweist.

Besonders bevorzugt ist es an einem, vorzugsweise beiden Halteelementen keine Verformungsaufnehmer vorzusehen, sondern sämtliche Verformungsaufnehmer an den Verformungselementen anzuordnen. Hierbei sind die Verformungselemente vorzugsweise derart angeordnet, dass die beiden Halteelemente durch die Verformungselemente verbunden sind. Durch Vorsehen der Verformungselemente, ausschließlich an den Verformungsaufnehmern können negative Einflüsse beim Befestigen der Halteelemente, wie hierbei auftretende Spannungen vermieden oder zumindest stark verringert werden. Ferner ist es hierdurch möglich, die Halteelemente steifer auszugestalten. Dies kann durch Herstellen der Halteelemente aus anderem Material als die Verformungselemente, Ausbilden der Halteelemente in anderer geometrischer Ausgestaltung, wie insbesondere anderer Dicke oder auch beispielsweise durch das Vorsehen von Versteifungsstreben realisiert werden. Beim Herstellen der Halteelemente sowie der Verformungselemente aus Kunststoffmaterial könnte eine Erhöhung der Steifigkeit auch durch Einlagern von Fasern oder dergleichen in die Haltelemente erfolgen.

Vorzugsweise sind die einzelnen Verformungselemente symmetrisch ausgebildet. Insbesondere sind weder an einer Oberseite noch an einer Unterseite Ausnehmungen oder Ansätze vorgesehen, die zu einer asymmetrischen Ausgestaltung führen würden. Dies hat den Vorteil, dass bei Erwärmung der Verformungselemente oder des gesamten Sensors eine gleichmäßige Ausdehnung in radialer Richtung erfolgt. Hierdurch sind durch Wölbung auftretende Fehlmessungen vermieden.

Besonders bevorzugt ist es, dass sowohl die beiden Halteelemente als auch die mindestens sechs Verformungselemente einstückig, insbesondere monolithisch ausgebildet sind. Hierbei ist es möglich, diese Bauteile des Kraft-Momenten-Sensors gemeinsam herzustellen, wobei die Herstellung beispielsweise durch 2D-Drahterrosion erfolgen kann. Die Herstellung ist somit gegenüber einem dreidimensionalen komplexen Kraft-Momenten-Sensor, wie er in DE 102 17 018 beschrieben ist, erheblich vereinfacht.

Die Verbindung der Verformungselemente mit den beiden Halteelementen erfolgt mit Hilfe von Festkörpergelenken. Das Vorsehen gesonderter Gelenke, deren Montage aufwendig ist und die einen großen Bauraum beanspruchen würden, ist daher nicht erforderlich. Hierdurch kann das Auftreten von sich ggf. addierenden Toleranzen vermieden werden, so dass die Qualität der Messergebnisse erheblich verbessert ist.

In besonders bevorzugter Ausführungsform des erfindungsgemäßen Kraft-Momenten-Sensors weist das innere Halteelement eine insbesondere mittige Öffnung auf, so dass das innere Halteelement in bevorzugter Ausführungsform ringförmig ausgebildet ist. Bei einem Außendurchmesser von ca. 10 mm kann mit dem erfindungsgemäßen Kraft-Momenten-Sensor eine Öffnung in dem inneren Halteelement zum Hindurchführen von Instrumenten oder anderen Bauteilen mit einem Durchmesser von 3,5 mm realisiert werden.

Besonders bevorzugt ist es, dass die Verformungselemente regelmäßig insbesondere rotationssymmetrisch angeordnet sind. Insbesondere sind die Verformungselemente bei einem scheiben- oder ringförmigen inneren Halteelement an dessen Umfang symmetrisch angeordnet. Hierbei ist vorzugsweise je Verformungselement ein Verformungsaufnehmer wie ein Dehnmessstreifen angeordnet. Zur Messung von drei Kräften und drei Momenten sind hierbei drei lineare Dehnmessstreifen und drei Scherungs-Dehnmessstreifen angeordnet. Diese sind vorzugsweise abwechselnd angeordnet. Ferner ist es bevorzugt, dass alle Verformungsaufnehmer in derselben Ebene, beispielsweise an der Oberseite oder der Unterseite der Verformungselemente angeordnet sind.

Bevorzugt ist es, dass vorzugsweise alle Verformungselemente identisch ausgebildet sind. Insbesondere sind die Verformungselemente in Draufsicht T-förmig ausgebildet. Hierbei sind vorzugsweise zwei Enden des T-förmigen Verformungselementes mit dem äußeren Halteelement und ein Ende mit dem inneren Halteelement verbunden. Hierbei sind die Verformungselemente vorzugsweise derart ausgebildet, dass ein erster Steg der T-förmigen Verformungselemente radial und der andere Steg tangential bezogen auf eine zentrale Kreislinie bzw. bezogen auf ein ringförmiges Halteelement angeordnet sind.

Beim Vorsehen mehrerer insbesondere sternförmig regelmäßig angeordneter Verformungselemente ist es bevorzugt, dass Verformungsaufnehmer zur Aufnahme von linearen Kräften mit Verformungsaufnehmer zur Aufnahme von Scherkräften abwechselnd angeordnet sind.

In besonders bevorzugter Ausführungsform weist der erfindungsgemäße Kraft-Momenten-Sensor mindestens drei, insbesondere mindestens sechs Verformungselemente auf. Bevorzugt ist es hierbei, dass je Verformungselement jeweils ein Verformungsaufnehmer angeordnet ist. Es ist jedoch auch möglich, zusätzlich Verformungselemente vorzusehen, die zur Versteifung der Struktur dienen, auf denen jedoch keine Verformungsaufnehmer angeordnet sind.

Ein weiterer Vorteil des erfindungsgemäßen Kraft-Momenten-Sensors in einer bevorzugten Ausführungsform besteht darin, dass einige insbesondere alle Verformungsaufnehmer als Folien-Dehnmessstreifen ausgebildet sein können. Hierbei können einzelne oder alle Verformungsaufnehmer in einer gemeinsamen Folie ausgebildet sein. Hierdurch ist das genaue Anordnen der Verformungsaufnehmer und insbesondere die genaue Ausrichtung der einzelnen Verformungsaufnehmer zueinander auf einfache Weise gewährleistet.

Nachfolgend wird die Erfindung anhand einer bevorzugten Ausführungsform unter Bezugnahme auf die anliegenden Zeichnungen näher erläutert.

Es zeigen:
- Figur 1: eine schematische, perspektivische Ansicht eines Kraft-Momenten-Sensors nach dem Stand der Technik,
- Figur 2: eine schematische Draufsicht einer bevorzugten Ausführungsform des erfindungsgemäßen Kraft-Momenten-Sensors und
- Figur 3: eine schematische, perspektivische Ansicht des in Figur 2 dargestellten Kraft-Momenten-Sensors.

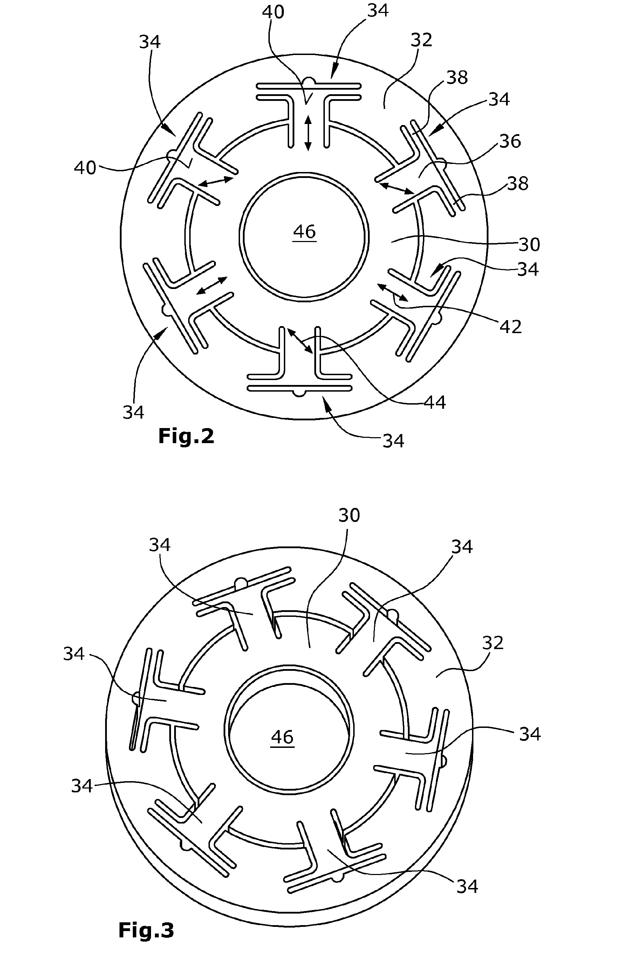

Der erfindungsgemäße Kraft-Momenten-Sensor (Fig. 2 und 3) weist in der dargestellten bevorzugten Ausführungsform ein inneres im Wesentlichen kreisringförmiges Halteelement 30 auf, das von einem äußeren im Wesentlichen ebenfalls kreisringförmigen Halteelement 32 umgeben ist. Die beiden Halteelemente 30, 32 sind über sechs regelmäßig am Umfang des inneren Halteelements 30 verteilt angeordnete Verformungselemente 34 miteinander verbunden. Die einzelnen Verformungselemente 34 sind in Draufsicht (Fig. 2) T-förmig ausgebildet. Die identisch ausgebildeten Verformungselemente 34 weisen einen Verformungsbalken 36 sowie zwei mit dem Verformungsbalken 36 verbundene Verbindungsstege 38 auf. Der Verformungsbalken 36 ist bezogen auf das ringförmige innere Halteelement 30 radial angeordnet, wobei die beiden Verbindungsstege 38 tangential verlaufen. Der Verformungsbalken 36 ist an seinem nach innen weisenden Ende mit dem inneren Halteelement 30 verbunden. Die beiden Verbindungsstege 38 sind an ihren äußeren Enden mit dem äußeren Halteelement 32 verbunden.

Auf jeder Oberseite 40 der Verformungselemente 34 ist ein Verformungsaufnehmer in Form eines Dehnmessstreifens angeordnet. Hierbei sind die Dehnmessstreifen in Figur 2 als Pfeile 42, 44 dargestellt, wobei die Pfeile 44 Linear-Dehnmessstreifen und die Pfeile 42 Scherungs-Dehnmessstreifen darstellen. Die Verformungsaufnehmer 42, 44 sind über nicht dargestellte elektrische und/oder optische Leitungen mit einer Auswerteeinrichtung zur Bestimmung von drei orthogonalen Kräften und drei orthogonalen Momenten verbunden.

Das innere Halteelement weist eine zentrale, mittige im dargestellten Ausführungsbeispiel kreisrunde Öffnung 46 zum Hindurchführen von Instrumenten, Bauteilen und dergleichen auf. Insbesondere dient die Öffnung 46 zum Hindurchführen chirurgischer Instrumente bei der Verwendung des erfindungsgemäßen Kraft-Momenten-Sensors in medizinischen Instrumenten.

Wie insbesondere aus Figur 3 ersichtlich ist, handelt es sich bei dem erfindungsgemäßen Kraft-Momenten-Sensor um einen flachen, im Wesentlichen zweidimensional ausgebildeten monolithisch ausgestalteten Kraft-Momenten-Sensor. Bei einem Außendurchmesser von beispielsweise 20 mm weist der Sensor nur eine Dicke von ca. 1,5 mm auf.

## Patentansprüche

1. Kraft-Momenten-Sensor zum Messen von vorzugsweise drei Kräften und vorzugsweise drei Momenten, mit
einem inneren Halteelement (30), das von einem äußeren Halteelement (32) umgeben ist,
mehreren die Halteelemente (30, 32) miteinander verbindenden Verformungselementen (34) und
mit den Verformungselementen (34) verbundenen Verformungsaufnehmern (42, 44), die über Leitungen mit einer Auswerteeinrichtung verbindbar sind,
**dadurch gekennzeichnet, dass**
die Verformungsaufnehmer (42, 44) ausschließlich an einer Ober-und/oder Unterseite der Verformungselemente (34) angeordnet sind.

2. Kraft-Momenten-Sensor nach Anspruch 1, **dadurch gekennzeichnet, dass** alle an der Oberseite angeordneten Verformungsaufnehmer (42, 44) in derselben Ebene und alle an der Unterseite angeordneten Verformungsaufnehmer (42, 44) in derselben Ebene angeordnet sind.

3. Kraft-Momenten-Sensor nach Anspruch 1 oder 2, **dadurch gekennzeichnet, dass** mindestens drei, insbesondere mindestens sechs Verformungselemente (34) vorgesehen sind, auf denen jeweils mindestens ein Verformungsaufnehmer (42, 44) angeordnet ist.

4. Kraft-Momenten-Sensor nach einem der Ansprüche 1 bis 3, **dadurch gekennzeichnet, dass** die Verformungselemente (34) als Festkörpergelenke ausgebildet und/oder über Festkörpergelenke mit den Halteelementen (30, 32) verbunden sind.

5. Kraft-Momenten-Sensor nach einem der Ansprüche 1 bis 4, **dadurch gekennzeichnet, dass** die Halteelemente (30, 32) eine höhere Steifigkeit als die Verformungselemente (34) aufweisen.

6. Kraft-Momenten-Sensor nach einem der Ansprüche 1 bis 5, **dadurch gekennzeichnet, dass** die Halteelemente (30, 32) und die Verformungselemente (34) einstückig ausgebildet sind.

7. Kraft-Momenten-Sensor nach einem der Ansprüche 1 bis 6, **dadurch gekennzeichnet, dass** das äußere Halteelement (32) und/oder das innere Halteelement (30) ringförmig ausgebildet ist.

8. Kraft-Momenten-Sensor nach einem der Ansprüche 1 bis 7, **dadurch gekennzeichnet, dass** die Verformungsaufnehmer (44) zur Aufnahme von Linearkräften abwechselnd mit Verformungsaufnehmern (44) zur Aufnahme von Scherkräften an benachbarten Verformungselemente (34) angeordnet sind.

9. Kraft-Momenten-Sensor nach einem der Ansprüche 1 bis 8, **dadurch gekennzeichnet, dass** das innere Halteelement (30) eine insbesondere mittige Öffnung (46) zum Hindurchführen von Instrumenten, Bauteilen und dergleichen aufweist.

10. Kraft-Momenten-Sensor nach einem der Ansprüche 1 bis 9, **dadurch gekennzeichnet, dass** die Verformungsaufnehmer (42, 44) als Linear-und/oder Scherungs-Dehnmessstreifen ausgebildet sind.

11. Kraft-Momenten-Sensor nach einem der Ansprüche 1 bis 10, **dadurch gekennzeichnet, dass** die Verformungsaufnehmer (42, 44) symmetrisch zwischen den Halteelementen (30, 32) angeordnet sind, insbesondere symmetrisch am Umfang des vorzugsweise ringförmigen inneren Halteelements (30) angeordnet sind.

12. Kraft-Momenten-Sensor nach einem der Ansprüche 1 bis 11, **dadurch gekennzeichnet, dass** die Verformungselemente (34) in Draufsicht T-förmig ausgebildet sind, wobei vorzugsweise zwei Enden mit dem äußeren Halteelement (32) und ein Ende mit dem inneren Halteelement (30) verbunden ist.

13. Kraft-Momenten-Sensor nach einem der Ansprüche 1 bis 12, **dadurch gekennzeichnet, dass** mehrere insbesondere alle Verformungsaufnehmer (42, 44) als Einheit, insbesondere als Folien-Dehnmessstreifen ausgebildet sind.
